# EUROPÄISCHE PATENTSCHRIFT

(11) **EP 2 446 958 B1**
(45) Veröffentlichungstag und Bekanntmachung des Hinweises auf die Patenterteilung: **03.09.2014**
(21) Anmeldenummer: 10014115.9
(22) Anmeldetag: 29.10.2010
(51) Int. Cl.: B01F 7/16, B01F 13/00, B25F 5/00, B25F 5/02, H02K 5/04, H02K 5/24, H02K 7/14, H02K 9/06, H02K 9/14

(54) **Handbetätigbare Rührmaschine**
Hand-operated agitating machine
Machine de mélange manuelle

(43) Veröffentlichungstag der Anmeldung: 02.05.2012
(73) Patentinhaber: Collomix Rühr-und Mischgeräte GmbH, 85080 Gaimersheim (DE)
(72) Erfinder: Essing, Alexander, 85049 Ingolstadt (DE); Baumann, Martin, 85080 Gaimersheim (DE)
(74) Vertreter: Liebl, Thomas

(56) Entgegenhaltungen:
- EP-A1- 2 172 311
- DE-A1-102005 040 529
- DE-A1-102006 029 236
- DE-U1-202004 016 642
- US-A- 2 209 287
- US-A- 2 323 945
- US-A- 2 846 192
- US-A- 3 109 913
- US-A- 3 894 254

## Beschreibung

Die Erfindung betrifft eine handbetätigbare Rührmaschine nach dem Oberbegriff des Anspruchs 1.

Für das professionelle Rühren und Mischen von Materialien, insbesondere auf Baustellen, sind handbetätigbare Rührmaschinen bekannt, die elektrisch angetrieben sind. Gemischt und gerührt werden insbesondere Fertigputz und Fertigmörtel, Spachtelmassen, Farben, Kleber, Tapetenkleister, Estrich, Beschichtungen, Dichtstoffe, und vieles mehr.

Eine derartige handbetätigbare Rührmaschine ist zum Beispiel aus der DE 92 13 255 U1 bekannt und besteht aus einem Maschinengehäuse mit einem darin untergebrachten Elektromotor als Antriebsmotor und einer zugeordneten Steuereinheit für eine Drehzahlsteuerung. Der Antriebswelle des Antriebsmotors ist ein Zwischengetriebe nachgeschaltet, von dem ausgehend wenigstens eine kurze Antriebswelle aus dem Maschinengehäuse herausragt. Am freien Ende dieser Antriebswelle ist ein Anschluss in der Art eines Spannfutters oder einer Schraubverbindung vorgesehen, über die ein Schaft eines Rührstabs mit dieser Antriebswelle verbindbar ist. Je nach dem zu mischenden Rührgut werden unterschiedliche Rührstäbe mit unterschiedlichen Rührkörben verwendet. Am Maschinengehäuse sind weiter zwei Handgriffe für jeweils die rechte und die linke Hand einer Bedienperson angebracht. An einem Handgriff, der als Griffstutzen direkt vom Maschinengehäuse absteht ist eine Schalteinrichtung angebracht, die im Stromkreis der Steuereinheit liegt.

Diese Schalteinrichtung besteht insbesondere aus einem Leistungssteller, dessen federbelastetes Betätigungselement entlang eines Stellwegs einstellbar ist, wobei bestimmten Stellwegen bestimmte Motordrehzahlen zugeordnet sind. Zudem ist diesem Leistungssteller eine mechanische Arretierung zugeordnet, die über einen Druckknopf in unmittelbarer Nähe des Stellelementes betätigbar ist.

Darüberhinaus sind handbetätigbare Rührmaschinen bekannt, bei denen das den Antriebsmotor aufnehmende Gehäuse aus einem Kunststoffmaterial hergestellt ist, an dem weiter das Handgriffelement mit auf gegenüberliegenden Seiten des Gehäuses liegenden Handgriffen angeformt ist. Als Fallschutz ist hier beispielsweise an den Längsseiten des Handgriffelements jeweils eine Blechstrebe aufgeschraubt, die die Handgriffe mit einem Überstand überragt, so dass es beim Ablegen der Rührmaschine zu keiner unerwünschten Beschädigung bzw. zu keinem unerwünschtem Verschmutzen des Handgriffelements insbesondere im Bereich der Betätigungseinrichtung kommt.

Mit derartigen handbetätigbaren Rührmaschinen lassen sich bereits sehr gute Rührergebnisse erzielen.

Die US 2,323,945, die eine Rührmaschine nach dem Oberbegriff des Anspruchs 1 offenbart, zeigt ein Küchengerät, bei dem eine Innenschale vorgesehen ist, die einen Antriebsmotor aufnimmt. Diese Innenschale ist über einen Halter mit einer Gehäuseaußenschale verbunden. Die Innenschale wird hier durch ein Gussteil gebildet, das Bestandteil einer Antriebseinheit bildet. An der Außenschale kann, wie in den Figuren 1 und 2 dieser US 2,323,945 schematisch gezeigt ist, ein Handgriffelement angebunden sein. Bei diesem Handgriffelement handelt es sich um einen herkömmliche Bügel, mittels dem das Küchengerät getragen bzw. ggf. verschwenkt werden kann.

Die US 2,209,287 zeigt einen Aufbau, bei dem der Motor in einem Außenschalenbereich eines Gehäuses aufgenommen und abgestützt und mittels einer Welle nach unten aus dem Gehäuse herausgeführt. Die Abtriebswelle treibt über ein Gewinde einen Rührer an.

Die US 3,109,913 zeigt einen im Inneren eines Gehäuses angeordneten Elektromotor, wobei zudem eine Heizvorrichtung vorgesehen ist, mittels der das zu mischende Gut auch beheizt werden kann.

Die DE 10 2005 040 529 A1 zeigt ein elektromotorisch betriebenes Küchengerät mit einem Kühlrad zum Kühlen von Getriebeelementen.

Weiter ist aus der US 3,894,254 B, die eine Rührmaschine nach dem Oberbegriff des Anspruchs 1 offenbart, ein Aufbau einer elektromotorischen Antriebseinheit mitsamt Handgriff bekannt, bei dem eine Innenschale formschlüssig und ohne Spalt in einer Außenschale eingesteckt gehaltert ist, wobei sich die Innenschale zudem mit einem Flansch oben an der Außenschale abstützt. Eine Kappe ist über eine Schraube mitsamt Mutter an dem Flansch der Innenschale festgelegt, wobei die Mutter ferner Schraubenfortsätze aufweist, die vom Flansch ausgehend durch einen Elastomerring eines Handgriffs in die Außenschale eingeschraubt sind.

Dementsprechend ist es Aufgabe der vorliegenden Erfindung, eine handbetätigbare Rührmaschine zur Verfügung zu stellen, die im Hinblick auf günstige Kraftflüsse bei der Maschinenbetätigung bzw. im Hinblick auf die Handhabbarkeit, insbesondere die Ergonomie der Rührmaschine, bzw. auch im Hinblick auf eine Schalldämpfung noch weiter optimiert ist.

Die Lösung dieser Aufgabe gelingt mit den Merkmalen des Anspruchs 1. Vorteilhafte Ausgestaltungen der Erfindung sind Gegenstand der darauf rückbezogenen Unteransprüche.

Gemäß Anspruch 1 wird eine handbetätigbare Rührmaschine vorgeschlagen, die ein Gehäuse aufweist, in dem ein Antriebsmotor, vorzugsweise ein Elektromotor, wenigstens zum Teil aufgenommen ist, wobei der Antriebsmotor wenigstens eine Antriebswelle aufweist, die unmittelbar oder mittelbar mit einem Schaft wenigstens eines Rührstabs wirkverbunden ist. Das Gehäuse weist eine wenigstens den Antriebsmotor wenigstens teilweise im Inneren aufnehmende Innenschale auf, die außenumfangsseitig wenigstens bereichs- oder abschnittsweise mit einem definierten Spaltabstand von einer ein- oder mehrteiligen Außenschale umgeben ist, wobei an der Außenschale ein Handgriffelement befestigt und/oder abgestützt ist, und wobei die Innenschale eine zylindrische Form aufweist, die in einem definierten Anbindungsbereich an der Außenschale als separates Bauteil angebunden ist oder mit dieser in einem definierten Anbindungsbereich materialeinheitlich und/oder einstückig verbunden ist, dergestalt, dass der Anbindungsbereich an einem, bezogen auf den innenschalenseitigen Motoraufnahmeraum, randbereichsseitigen oder endseitigen Innenschalenwandbereich der Innenschale liegt. Erfindungsgemäß ist vorgesehen, dass die Anbindung der Innenschale an der Außenschale in einem unteren Endbereich der Innenschale und damit im Wesentlichen unterhalb des innenschalenseitigen Aufnahmeraums für den Antriebsmotor erfolgt, so dass ein aussenschalenseitiger Kraftfluss vom Handgriffelement aus entlang der Außenschale und damit im Wesentlichen an der Innenschale vorbei im Bereich außerhalb des innenschalenseitigen Motoraufnahmeraums in die Innenschale eingeleitet wird.

Mit einem derartigen erfindungsgemäßen Gehäuseaufbau kann der Kraftfluss vorteilhaft optimiert werden, zum Beispiel für den Fall, dass ein Handgriffelement mit der Außenschale verbunden und/oder dort abgestützt wird, was zu einer Entlastung der den Antriebsmotor aufnehmenden Innenschale führt, so dass der Kraftfluss von dem Handgriffelement über die Außenschale im Wesentlichen an der Innenschale vorbei in einen definierten Bereich der Rührmaschine bzw. eines Gehäuses der Rührmaschine ein- bzw. abgeleitet werden kann. Dadurch wird die Verbindungssteifigkeit des Gehäuses insgesamt erhöht.

Ein weiterer wesentlicher Vorteil des erfindungsgemäßen Gehäuseaufbaus mit Innenschale und Außenschale kann auch darin gesehen werden, dass durch das Vorsehen einer derartigen ein- oder mehrteiligen Außenschale eine erhöhte konstruktive Freiheit im Hinblick auf die Anordnung eines Handgriffelementes gewonnen wird. Da die Außenschale nicht zur Aufnahme des Antriebsmotors dient, sondern die Innenschale, kann die Außenschale somit zum Beispiel, bezogen auf eine Einsatzposition bei einer Rührmaschinenbedienung, einfachst nach oben in Hochachsenrichtung gezogen werden und somit auf einfache Weise auch das Handgriffelement weiter nach oben versetzt werden, wodurch sich eine verbesserte Arbeitshöhe für eine Bedienperson ergibt.

Zudem wird mit einer derartig mehrschaligen Konstruktion eines Gehäuses eine erhöhte designerische Freiheit zur Gestaltung der Rührmaschine gewonnen, was sich insbesondere vorteilhaft auf die ergonomische Ausgestaltung bzw. die ergonomische Optimierung der Rührmaschine auswirkt.

Gemäß einer besonders bevorzugten Ausgestaltung ist vorgesehen, dass die Innenschale eine im Wesentlichen topf- bzw. domartige Form aufweist.

Die erfindungsgemäße Anbindung der Innenschale an der Außenschale erfolgt somit, bezogen auf den in der Innenschale aufgenommenen Antriebsmotor, so tief bzw. in einem solchen Bereich, dass die zum Beispiel bzw. bevorzugt über ein an der Außenschale angeordnetes Griffelement eingeleiteten Kräfte in einem definierten Maß in einem Randbereich und damit im Wesentlichen außerhalb des Aufnahmebereichs des Antriebsmotors in das Gehäuse eingeleitet werden. Das heißt somit mit anderen Worten, dass der Anbindungsbereich der Innenschale an der Außenschale bevorzugt an einem solchen, bezogen auf den innenschalenseitigen Motoraufnahmeraum, randbereichsseitigen oder endseitigen Innenschalenwandbereich der Innenschale liegt, dass ein außenschalenseitiger Kraftfluss im Wesentlichen im Bereich außerhalb des innenschalenseitigen Motoraufnahmeraums in die Innenschale eingeleitet wird. Gemäß einer konkreten Ausgestaltung hierzu wird vorgeschlagen, dass die Außenschale an einem rührstabseitigen Innenschalenbereich angebunden ist und sich von diesem ausgehend in Richtung zu einem Rührstab abgewandten Innenschalenendbereich erstreckt. Unter einem rührstabseitigen Innenschalenbereich wird hier derjenige Bereich verstanden, der im montierten Zustand eines Rührstabes näher zum Rührstab liegt als ein sich daran in Richtung vom Rührstabbereich weg erstreckender und damit rührstababgewandter Innenschalenbereich. Mit einer derartigen konkreten Ausgestaltung wird ein insgesamt kompakter Gehäuseaufbau möglich.

Mit einer derartigen Anbindung der Innenschale an der Außenschale wird sichergestellt, dass ein einziges, einfach zu handhabendes Bauteil zur Verfügung gestellt wird. Ein derartiges eine Innenschale und eine daran angebundene Außenschale aufweisendes Gehäusebauteil kann zum Beispiel auf preiswerte Weise durch ein stabiles Kunststoffmaterial hergestellt werden, insbesondere durch Gießen oder dergleichen einstückig hergestellt werden.

Gemäß einer weiteren besonders bevorzugten Ausgestaltung nach Anspruch 2 ist vorgesehen, dass der zwischen der Innenschale und der Außenschale ausgebildete Spaltbereich wenigstens bereichsweise, vorzugsweise vollständig umfangsseitig umlaufend ausgebildet ist. Dadurch wird sichergestellt, dass von sämtlichen gewünschten Umfangsbereichen her eine definierte Krafteinleitung über die Außenschale erfolgt. Grundsätzlich ist es insbesondere aus Kraftflussgründen vorteilhaft, lediglich eine definierte Hauptanbindungsstelle zwischen Innenschale und Außenschale vorzusehen, wie dies zuvor bereits ausführlich erläutert worden ist. Dem steht aber nicht entgegen, dass grundsätzlich weiter auch vorgesehen sein kann, dass im Spaltbereich wenigstens ein die Außenschale mit der Innenschale verbindender Verbindungssteg vorgesehen ist. Derartige Verbindungsstege dienen dann weniger der Kraftableitung bzw. Kraftführung als vielmehr der gegebenenfalls erforderlichen Stabilisierung der Außenschalenposition.

Gemäß einer weiteren besonders bevorzugten konkreten Ausgestaltung nach Anspruch 3 wird vorgeschlagen, dass die Außenschale mit einem definierten Konuswinkel gegen eine Längsmittelachse des Gehäuses geneigt ist, insbesondere von einem rührstabseitigen Innenschalenbereich ausgehend konisch nach oben und außen in Richtung zu einem oberen, rührstababgewandten Innenschalenendbereich geführt ist. Mit einer derartigen konischen Ausgestaltung der Außenschale wird in einem rührstabseitigen Gehäusebereich ein insgesamt kompakter und schlankbauender Aufbau zur Verfügung gestellt. Im oberen, rührstababgewandten Gehäusebereich wird dagegen eine solche, den Kraftfluss nicht beeinträchtigende breite Ausgestaltung möglich, dass dort ein Handgriffelement in besonders vorteilhafter und ergonomisch günstiger Weise abgestützt und angebracht werden kann. Neben der Kompaktheit, die zu einer vorteilhaften Volumenreduzierung der Rührmaschine führt, lassen sich dadurch insbesondere auch wesentliche Freiheiten im Hinblick auf eine optisch ansehnliche Gestaltung der Rührmaschine in designtechnischer Sicht erzielen. Des Weiteren ergibt sich durch die Konizität auch ein wesentlicher fertigungstechnischer Vorteil, zum Beispiel in Verbindung mit der Entformung des zum Beispiel durch Gießen hergestellten Gehäuses. Zudem können dadurch konisch verlaufende Wanddicken vermieden werden.

Das Handgriffelement weist gemäß Anspruch 4 bevorzugt einen ein- oder mehrteiligen, mittigen oder zentralen Nabenbereich auf, der in einer vorzugsweise flächigen Anlageverbindung an wenigstens einer außenschalenseitigen Anlage- und/oder Abstützfläche anliegt und/oder dort befestigt ist. Die Festlegung erfolgt hier insbesondere mittels wenigstens eines Befestigungselementes, zum Beispiel einer Schraubverbindung oder dergleichen. Die Festlegung erfolgt bevorzugt mittels lösbaren Befestigungsmitteln, um zum Beispiel einen Austausch des Handgriffelementes zu ermöglichen. Grundsätzlich wäre jedoch auch der Einsatz anderer Befestigungselemente, wie zum Beispiel von Nietverbindungen, Clipselementen oder dergleichen lösbarer Verbindungsmittel möglich. Mit einem derartigen Handgriffelement, das einen mittigen oder zentralen Nabenbereich aufweist, ergibt sich eine definierte und funktionssichere Abstützung des Handgriffelementes an der Außenschale, was sich insbesondere vorteilhaft für eine definierte Krafteinleitung in die Außenschale auswirkt.

Dieser Nabenbereich kann nach Anspruch 5 bevorzugt ringförmig und/oder segmentartig ausgebildet sein und sich somit außenumfangsseitig im Bereich der Außenschale an einer oder mehreren definierten Anlage- und/oder Abstützflächen abstützen. Besonders bevorzugt ist dabei eine Ausgestaltung gemäß der der Nabenbereich des Handgriffelementes im montierten Zustand von einem definierten Innenschalenbereich durchgriffen ist. Mit einer derartigen Maßnahme lässt sich auf einfache Weise ein kompakter Aufbau erzielen. Die Begrifflichkeiten "ringförmig" und "segmentartig" in Verbindung mit der Begrifflichkeit "Nabenbereich" sind hier ausdrücklich in einem sehr weiten Sinne zu verstehen und sollen alle diejenigen Ausgestaltungen und/oder Ausführungsformen umfassen, bei denen eine irgendwie vorgesehen ist geartete umfangsseitige Abstützung des Handgriffelementes an einem oder mehreren definierten Außenschalenbereichen erfolgt, sei es, dass dieser Nabenbereich ringförmig geschlossen oder mit bezogen auf die Umfangsrichtung Unterbrechungen zur Ausbildung segmentartiger Abschnitte ausgebildet ist. Auch von einer Kreisringform abweichende Formgebungen, zum Beispiel eckig, oval oder dergleichen, sind jederzeit möglich. Wichtig ist hier lediglich die über den wenigstens einen als Nabenbereich bezeichneten, von den eigentlichen Griffelementen beabstandeten zentralen Bereich des Handgriffelementes erfolgende definierte Krafteinleitung in die Außenschale.

Gemäß einer weiteren konkreten Ausgestaltung hierzu ist nach Anspruch 6 vorgesehen, dass auf einer rührstababgewandten Seite des Gehäuses eine Gehäusekappe auf die Innenschale aufgesetzt und mit dieser verbunden ist, wobei sich ein definierter Gehäusekappenbereich, zum Beispiel ein Gehäusekappenrandbereich, im montierten Zustand wenigstens bereichs- oder abschnittsweise auf dem Nabenbereich des Handgriffelementes abstützt und/oder diesen um- oder hintergreift. Dieses erfolgt insbesondere dergestalt, dass der Nabenbereich des Handgriffelementes funktionssicher zwischen der Gehäusekappe und der wenigstens einen außenschalenseitigen Anlage- und/oder Abstützfläche verklemmt ist.

In diesem Zusammenhang kann weiter vorgesehen sein, dass die Innenschale mehrere voneinander beabstandete und in Richtung Gehäusekappe weisende Schraubbutzen oder dergleichen Schraubelemente aufweist, an denen sich die Gehäusekappe innenschalenseitig abstützen kann und/oder in die von Seiten der Gehäusekappe her Befestigungsschrauben einschraubbar sind. Dadurch wird eine funktionssichere, einfach herzustellende und einfach zu bewerkstelligende Festlegungsmöglichkeit der Gehäusekappe an der Innenschale zur Verfügung gestellt, wobei die Schraubbutzen in einer vorteilhaften Doppelfunktion gleichzeitig die Abstützung als auch die Festlegung der Gehäusekappe unterstützen. Grundsätzlich wäre aber auch, alternativ oder zusätzlich, eine Anbindung der Gehäusekappe an der Außenschale und/oder am Handgriffelement möglich.

Gemäß einer weiteren besonders bevorzugten erfindungsgemäßen Ausgestaltung nach Anspruch 7 ist vorgesehen, dass die wenigstens eine außenschalenseitige Anlage- und/oder Abstützfläche durch einen von der Außenschale abragenden Flanschbereich gebildet ist, der auf einer dem Nabenbereich des Handgriffelements zugewandten Oberseite die Anlage- und/oder Abstützfläche für den Nabenbereich des Handgriffelementes ausbildet und in dessen unterseitigen Bereich wenigstens eine Lufteinlassöffnung integriert ist, über die Kühlluft in den Spaltbereich zwischen Innenschale und Außenschale einströmen kann. In diesem Zusammenhang ist besonders bevorzugt vorgesehen, dass mehrere voneinander beabstandete Flanschbereiche außenumfangsseitig um die Außenschale herum angeordnet sind, so dass sich eine vorteilhafte symmetrisch umfangsseitige Abstützung und damit Krafteinleitung ergibt.

Die Integration der wenigstens einen Lufteinlassöffnung in den unterseitigen Bereich des wenigstens einen Flanschbereichs weist den besonderen Vorteil auf, dass die Kühlluft hier ungehindert einströmen kann, wobei gleichzeitig durch die teilweise Überdeckung bzw. Abdeckung mittels des Flanschbereichs sichergestellt ist, dass dieser in einer vorteilhaften Doppelfunktion neben seiner angestammten Funktion zur Festlegung und Abstützung des Nabenbereichs gleichzeitig eine Schutzfunktion der wenigstens einen Lufteinlassöffnung vor Verschmutzen und damit dem unerwünschten Eindringen von Verunreinigungen in den Gehäuseinnenraum bewirkt.

Die Innenschale ist bevorzugt so ausgebildet, dass diese gemäß Anspruch 8 den vorzugsweise durch einen Elektromotor gebildeten Antriebsmotor formschlüssig umgibt und/oder aufnimmt. Dadurch wird eine kompakte Gehäusebauweise erzielt, in der zudem sichergestellt ist, dass der Antriebsmotor funktionssicher aufgenommen und gelagert ist.

Gemäß einer besonders bevorzugten konkreten Ausgestaltung ist gemäß Anspruch 9 vorgesehen, dass die Innenschale wenigstens eine der wenigstens einen äußeren Lufteinlassöffnung in der Außenschale zugeordnete und/oder zugewandte innere Lufteinlassöffnung aufweist, über welche wenigstens eine innere Lufteinlassöffnung Kühlluft in den Bereich des Antriebsmotors gelangt und diesen anströmt und/oder umströmt und/oder durchströmt. Mit einem derartigen Aufbau wird eine zuverlässige Kühlung des Antriebsmotors erzielt. Besonders bevorzugt ist hierbei ein Aufbau, bei dem die Kühlluft einen zwischen einem Rotor und einem Stator eines Elektromotors als Antriebsmotor ausgebildeten Rotor-Stator-Luftspalt durchströmt.

Besonders vorteilhaft ist weiter eine Ausgestaltung gemäß Anspruch 10, gemäß der im Bereich eines vorzugsweise auf der Antriebswelle des Antriebsmotors gelagerten Lüfterrades ferner wenigstens eine Luftauslassöffnung vorgesehen ist, über die die Kühlluft nach dem Um- und/oder An- und/oder Durchströmen des Antriebsmotors aus dem Gehäuse abströmt, wobei im Bereich der wenigstens einen Luftauslassöffnung wenigstens ein schalldämpfendes Element angeordnet ist. Mit einem derartigen schalldämpfenden Element können vorteilhaft die hohen Frequenzen dort herausgefiltert werden, wo sie entstehen, was zu einer deutlichen Reduzierung der Lärmbelastung durch die Rührmaschine führt, was wiederum von der Bedienperson als besonders vorteilhaft und angenehm empfunden wird.

Die wenigstens eine Luftauslassöffnung kann grundsätzlich in einem beliebigen Rührmaschinenbereich angeordnet sein. Besonders bevorzugt ist eine Ausgestaltung nach Anspruch 11, gemäß der die wenigstens eine Luftauslassöffnung in einem Luftauslassring ausgebildet ist, der einstückig und/oder materialeinheitlich mit wenigstens einem Gehäuse der Rührmaschine ausgebildet ist oder der alternativ durch ein separates, mit wenigstens einem Gehäuse der Rührmaschine verbindbares Bauteil gebildet ist, wobei bevorzugt vorgesehen ist, dass das wenigstens eine Schalldämpfungselement im Bereich des Luftauslassrings befestigt und/oder gehaltert ist. Ein derartiger Luftauslassring ermöglicht, insbesondere in Verbindung mit einem durch ein separates Bauteil gebildeten Luftauslassring, ein definiertes Ausströmen der Kühlluft bzw. auch eine herstellungstechnisch einfache Anordnung des wenigstens einen Schalldämpfungselementes, das zum Beispiel in einen derartigen Luftauslassring eingelegt und dort gehaltert sowie festgelegt werden kann.

Die Schalldämpfung ist nach Anspruch 12 bevorzugt durch ein bezogen auf die Ausströmrichtung der Kühlluft, oberes und/oder unteres Schalldämpfungselement gebildet. Das oder die Schalldämpfungselement(e) ist bzw. sind bevorzugt wenigstens zum Teil ringförmig umlaufend ausgebildet und/oder aus einem Schaumstoffmaterial hergestellt.

Die wenigstens eine Luftauslassöffnung ist ebenso wie die wenigstens eine Lufteinlassöffnung im Bereich der Innenschale und im Bereich der Außenschale bevorzugt schlitzartig ausgebildet und erstreckt sich über einen definierten Umfangsbereich des jeweiligen Bauteils. Mit derartigen Luftschlitzen wird auf einfache Weise eine definierte Kühlluftströmung in ausreichender Menge sowie auch eine gezielte Kühlluftführung möglich.

Eine weitere vorteilhafte Ausführungsvariante der vorliegenden Erfindungsidee sieht vor, dass die Rührmaschine ferner ein mit dem Antriebsmotor-Gehäuse mittelbar, insbesondere über einen Luftauslassring, oder unmittelbar verbundenes Getriebegehäuse aufweist, in dem ein mit der Antriebswelle zusammenwirkendes Getriebe angeordnet ist, über das der ebenfalls mit dem Getriebe gekoppelte wenigstens eine Rührstab in definierter Weise betätigbar, insbesondere drehbetätigbar ist. Ein derartiges Getriebe kann grundsätzlich auf unterschiedlichste Weise ausgebildet sein, so zum Beispiel als nicht schaltbares oder aber auch als schaltbares Getriebe. Selbstverständlich ist es grundsätzlich auch möglich, die Antriebswelle des Antriebsmotors direkt mit dem Rührstab zu koppeln, sofern dies im Hinblick auf die Beherrschung der antriebsmotorseitig zur Verfügung gestellten Drehzahlen sinnvoll ist.

Gemäß einer weiteren besonders bevorzugten Erfindungsvariante ist nach Anspruch 13 vorgesehen, dass das Handgriffelement einen Querbügel mit einem mittleren, dem Gehäuse des Antriebsmotors zugeordneten und/oder dort abgestützten und/oder dort festgelegten Nabenbereich, vorzugsweise mit einem ringförmigen Nabenbereich, aufweist, von welchem Nabenbereich mehrere Querstreben strahlartig abragen, wobei auf, bezogen auf den Nabenbereich, gegenüberliegenden Querbügelseiten jeweils ein Handgriff angeordnet ist. Ein derartiger Aufbau eines Handgriffelementes ist besonders stabil, insbesondere für den Fall, dass der Querbügel aus einem Stahlmaterial hergestellt ist. Des Weiteren ist hierdurch durch eine besonders vorteilhafte umfangsseitig gleichmäßig verteilte Krafteinleitung in die Außenschale möglich. Insbesondere eine geneigte Ausbildung des Handgriffelementes ermöglicht eine komfortable Handhabung der Rührmaschine durch den Bediener über längere Zeit. Zudem kann dadurch ein besonders optisch ansprechendes Handgriffelement-Design zur Verfügung gestellt werden.

Gemäß einer besonders bevorzugten Ausgestaltung kann weiter vorgesehen sein, dass die Handgriffe jeweils durch Griffschalen gebildet sind, insbesondere durch halbschalenartige Griffschalen, die miteinander und/oder mit den Querstreben verbunden sind, und zwar insbesondere dergestalt verbunden sind, dass auf jeder Querbügelseite wenigstens zwei voneinander beabstandete Querstrebenenden zur Festlegung und/oder Abstützung der Griffschalen dienen, die die zugeordneten Querstrebenbereiche vorzugsweise zwischen sich in einer funktionssicheren Weise verklemmen. Mit einem derartigen Aufbau wird eine sichere Festlegung an den Querstreben ermöglicht.

Gemäß einer weiteren bevorzugten Ausgestaltung wird vorgeschlagen, dass die Querstreben die an diesen festgelegten Handgriffe wenigstens zum Teil in definierter Weise mit einem Überstand überragen, der dann einen Fallschutzüberstand ausbildet und einer Beschädigung bzw. einer Verschmutzung des regelmäßig aus einem Kunststoffmaterial hergestellten Handgriffs entgegenwirkt. Es versteht sich, dass der Querbügel in diesem Zusammenhang zumindest im Bereich seines Fallschutzüberstandes aus einem stabilen Material, insbesondere aus einem Metall, beispielsweise einem Stahlmaterial, hergestellt ist.

Für eine besonders ergonomische Bedienung des Handrührgeräts durch den Bediener wird weiter vorgeschlagen, dass die Handgriffe von einer Bedienerposition aus gesehen mit einem definierten Winkel nach schräg innen zum Nabenbereich bzw. Gehäusebereich hin angestellt sind, so dass sich eine nach innen geneigte bzw. gebogene Handgriffelement-Ausgestaltung ergibt, die besonders ergonomisch und damit bedienerfreundlich ist.

Gemäß einer besonders bevorzugten Doppelfunktion kann weiter vorgesehen sein, dass die zuvor beschriebenen Griffschalen wenigstens eines der Handgriffe einen Hohl- und/oder Aufnahmeraum zwischen sich ausbilden, in dem eine Betätigungseinrichtung für den Antriebsmotor gelagert und/oder aufgenommen ist. Beispielsweise kann darin ein Handschalter mitsamt zugeordneter Elektronik und/oder Kabelanschluss gelagert und/oder aufgenommen sein. In diesem Zusammenhang ist es weiter besonders vorteilhaft, dass ein mit dem Handschalter mittelbar oder unmittelbar verbundenes Netzkabel aus dem Handgriff an einer der Bedienperson zugewandten Handgriffseite herausgeführt ist und/oder eine mit dem Antriebsmotor gekoppelte Verkabelung vom Handgriff bzw. dem Handschalter ausgehend über wenigstens eine der Querstreben des Querbügels, vorzugsweise abgekapselt mittels einer querstrebenseitig anordenbaren Schutzschale, zum Gehäuse und weiter zum Antriebsmotor geführt ist. Mit der Herausführung des Netzkabels auf der der Bedienperson zugewandten Seite wird sichergestellt, dass sich das Netzkabel nicht ohne weiteres im Rührstabbereich befindet und sich dort gegebenenfalls verheddern kann. Mit der insbesondere abgekapselten Führung der zum Antriebsmotor geführten querstrebenseitig verlaufenden Verkabelung wird auf einfache Weise ein auch für den rauen Baustellenbetrieb geeigneter Anschluss des Antriebsmotors an die handgriffelementseitige Betätigungseinrichtung sichergestellt.

Wie erfinderseitige Untersuchungen gezeigt haben, ist es insbesondere für eine lang andauernde Rührmaschinenbetätigung vorteilhaft, wenn die Handgriffe vorzugsweise auf ihrer der Bedienerposition abgewandten Stirnseite wenigstens eine muldenförmige, schalen- oder wannenartige Vertiefung aufweisen, der vorzugsweise eine Betätigungseinrichtung zur Betätigung des Antriebsmotors an der Unterseite des Handgriffs zugeordnet ist. Mit einer derartigen muldenförmigen Vertiefung, insbesondere auch in Verbindung mit den zuvor bereits ausführlich gewürdigten Ausgestaltungsmöglichkeiten des Handgriffelementes, wird eine Daumenablage zur Verfügung gestellt, die ergonomisch günstig ist, und die Hand des Bedieners automatisch in die richtige Griffposition am jeweiligen Handgriff zwingt. In diesem Zusammenhang ist dann die muldennahe Anordnung des Betätigungselementes, zum Beispiel eines Handschalters, vorteilhaft, da dieser dann einfachst mittels zum Beispiel des Zeigefingers oder des Mittelfingers ergriffen und betätigt werden kann. Bei zwei oder mehreren muldenförmigen Vertiefungen werden vorteilhaft unterschiedliche Daumenablagen zur Verfügung gestellt, was einen definierten Wechsel der Daumenablageposition während einer längeren Rührmaschinenbetätigung ermöglicht und damit für einen erhöhten Bedienerkomfort sorgt.

Die Erfindung wird nachfolgend anhand einer Zeichnung näher erläutert.
Es zeigen:
- Fig. 1: schematisch eine perspektivische Draufsicht auf eine beispielhafte Ausführungsform einer erfindungsgemäßen handbetätigbaren Rührmaschine von einer einer Bedienperson abgewandten Vorderseite,
- Fig. 2: eine perspektivische Draufsicht entsprechend Fig. 1 in etwa um 180° gedreht,
- Fig. 3: schematisch eine Vorderansicht der Rührmaschine gemäß Fig. 1 und 2,
- Fig. 4: schematisch eine perspektivische Unteransicht der Rührmaschine nach den Fig. 1 bis 3,
- Fig. 5: schematisch eine Draufsicht auf die Rührmaschine nach Fig. 1 bis 4,
- Fig. 6: schematisch eine teilweise Explosionsdarstellung einer erfindungsgemäßen Rührmaschine,
- Fig. 7: schematisch eine Schnittansicht entlang der Linie A-B der Fig. 2,
- Fig.8: schematisch und perspektivisch eine Draufsicht auf eine Ausführungsform eines erfindungsgemäßen Antriebsmotoren-Gehäuses mit Innenschale und Außenschale,
- Fig. 9: schematisch eine perspektivische Unteransicht des in Fig. 8 dargestellten Antriebsmotoren-Gehäuses, und
- Fig. 10: schematisch einen Querschnitt durch das Gehäuse gemäß der Fig. 8 und 10.

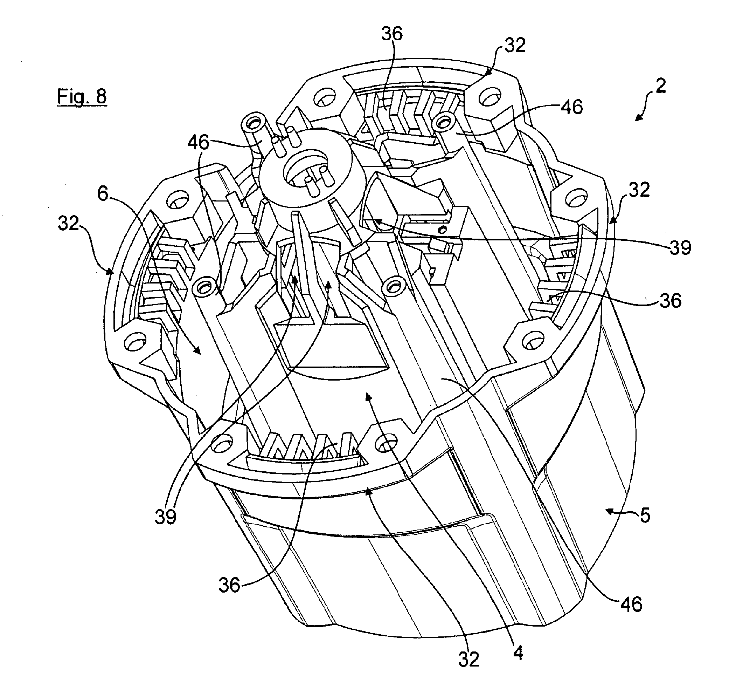

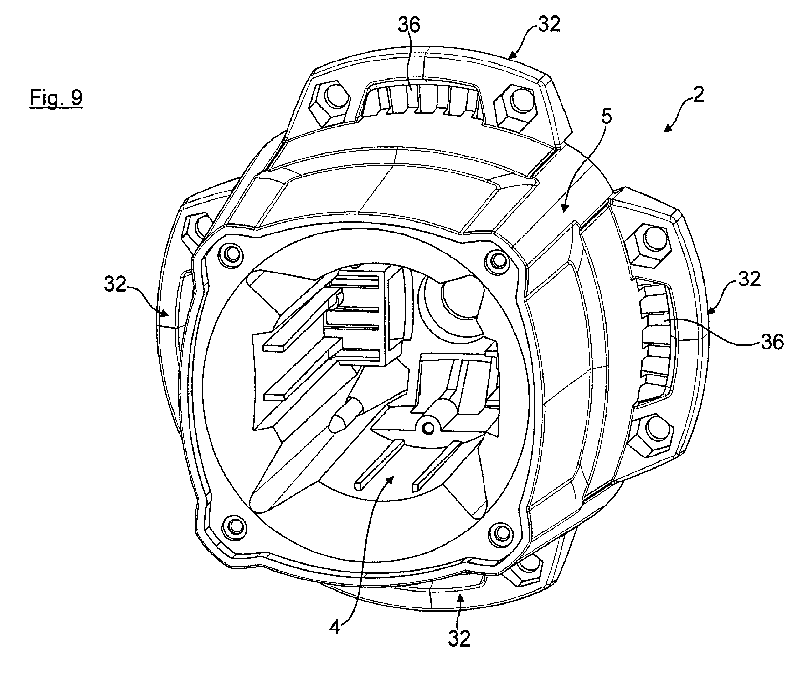

Die in den Figuren beispielhaft dargestellte Ausführungsform einer handbetätigbaren Rührmaschine 1 umfasst ein in den Fig. 8 bis 10 separat dargestelltes Antriebsmotoren-Gehäuse 2, das eine, einen nachfolgend noch näher beschriebenen Elektromotor 3 als Antriebsmotor formschlüssig aufnehmende Innenschale 4 aufweist, die außenumfangsseitig unter Ausbildung eines Spaltbereichs 6, der hier beispielhaft vollständig umlaufend ausgebildet ist, von einer Außenschale 5 mit einem definierten Spaltabstand 7 umgeben ist.

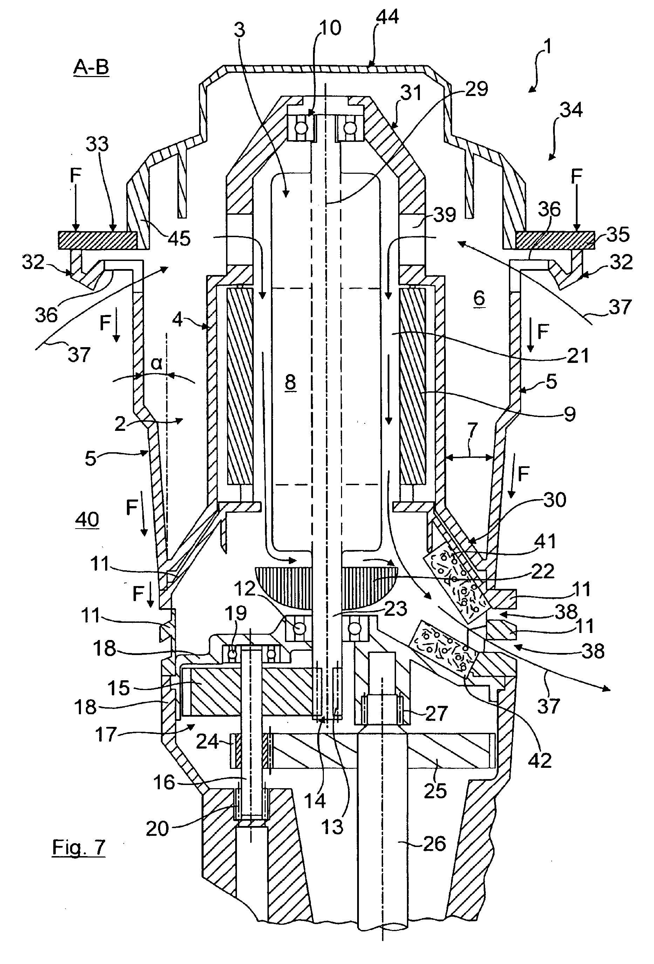

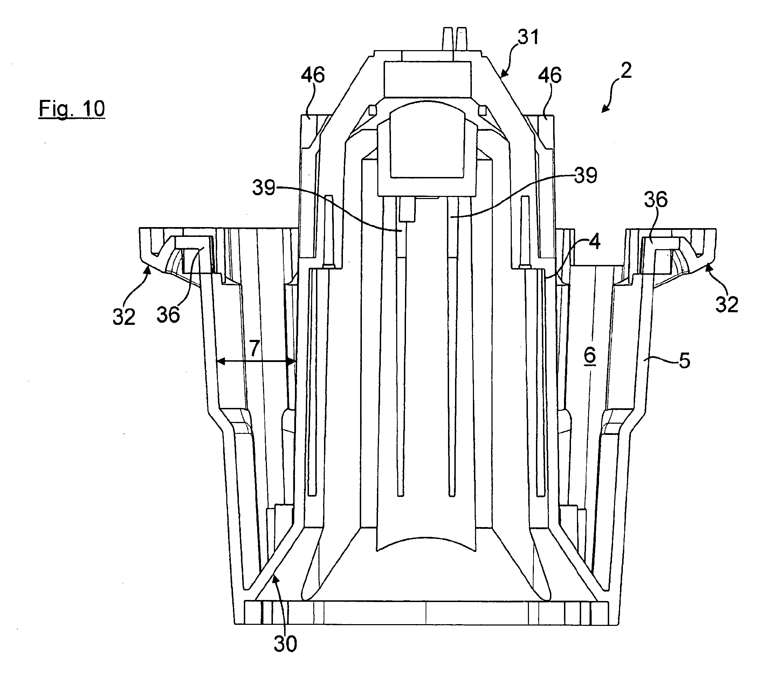

Wie dies insbesondere aus den Fig. 7 und 10, das heißt den Schnittansichten ersichtlich ist, weist die Innenschale 4 eine im Wesentlichen topf- bzw. domartige bzw. im Wesentlichen zylindrische Form auf, die in ihrem Inneren einen Aufnahmeraum für den Elektromotor 3 ausbildet, der einen Rotor 8 sowie einen Stator 9 aufweist. Sowohl der Rotor 8 als auch der Stator 9 können herkömmlicher Bauart sein und sind hier lediglich äußerst beispielhaft und schematisch gezeigt.

Der Rotor 8 ist einerseits über ein Kugellager 10 in der Innenschale 4 drehbar gelagert. Zudem ist der Rotor 8 in einem ein Zwischengetriebe 17 aufnehmenden Getriebegehäuse 18 mittels eines weiteren Kugellagers 12 drehbar gelagert. Dieses Getriebegehäuse 18 ist fest mit einem Luftauslassring 11 verbindbar, welcher wiederum ebenfalls fest mit dem Antriebsmotorengehäuse 2 verbindbar ist.

Der Stator 9 ist, was in der Fig. 7 ebenfalls lediglich äußerst schematisch und beispielhaft dargestellt ist, ortsfest mit einem Innenwandbereich der Innenschale 4 verbunden, wobei zwischen dem Rotor 8 und dem Stator 9 ein Rotor-Stator-Luftspalt 21 ausgebildet ist.

Auf der luftauslassringseitigen Seite des Rotors 8 ist auf einer die Antriebswelle ausbildenden Rotorwelle 23 ein hier lediglich äußerst schematisch und beispielhaft dargestelltes Lüfterrad 22 angeordnet, dessen Funktionsweise nachfolgend noch näher erläutert wird.

Die Rotorwelle 23 ist mit einem Wellenüberstand 14, das Kugellager 12 überragend, in den Bereich des Getriebegehäuses 18 geführt und weist dort eine Außenverzahnung 13 auf, die mit einem Stirnrad 15 einer Getriebewelle 16 des Zwischengetriebes 17 kämmt.

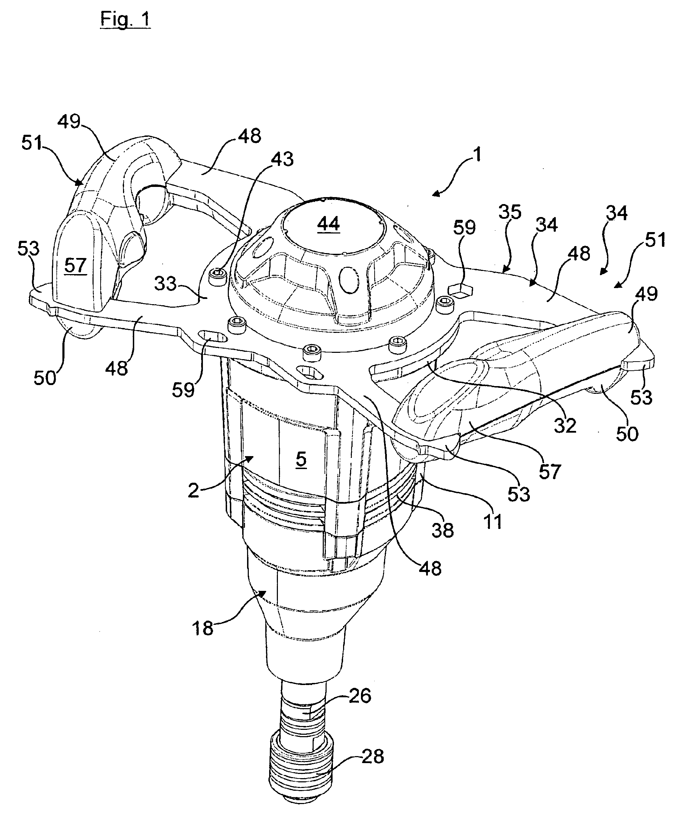

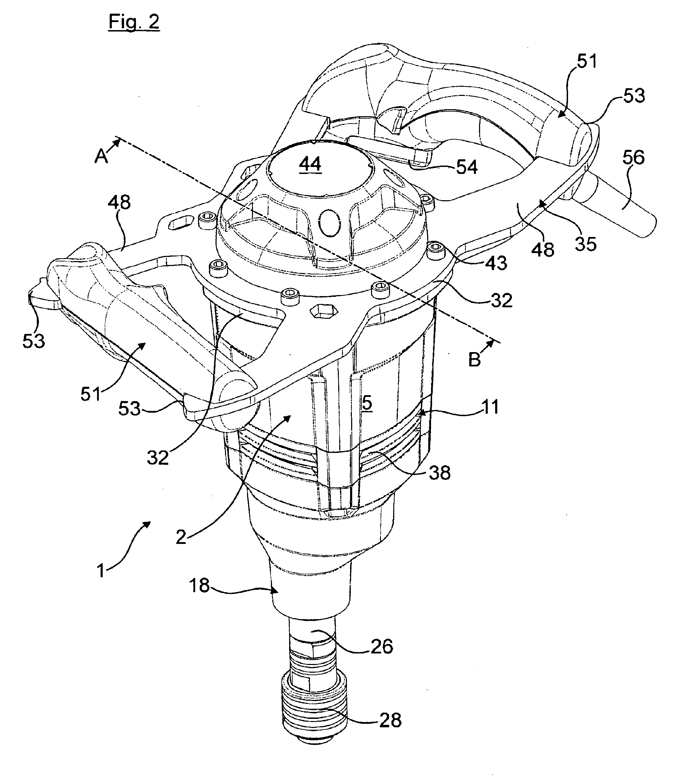

Die Getriebewelle 16 ist im Bereich des Getriebegehäuses 18 hier einerseits mittels eines Kugellagers 19 sowie andererseits mittels eines Nadellagers 20 drehbar gelagert und trägt neben dem Stirnrad 15 noch ein ebenfalls als Stirnrad ausgebildetes Abtriebszahnrad 24, das mit einem Stirnrad 25 einer Abtriebswelle 26 kämmt, die mittels mehrerer Lagerstellen, von denen hier lediglich beispielhaft ein Nadellager 27 im Bereich des Getriebegehäuses 18 gezeigt ist, drehbar im Getriebegehäuse 18 gelagert ist. Diese Abtriebswelle 26 ist, wie dies beispielsweise aus den Fig. 1 und 2 ersichtlich ist, aus dem Getriebegehäuse 18 nach außerhalb des Gehäusebereichs geführt und weist endseitig ein Anschlusselement 28, zum Beispiel eine Schnellverschlusskupplung, für einen hier nicht gezeigten Schaft eines Rührstabs oder dergleichen Rührwerkzeug auf.

Bei einer Betätigung des Elektromotors 3 wird somit über die als Antriebswelle fungierende Rotorwelle 23 mit entsprechend definierter Getriebeübersetzung durch das Zwischengetriebe 17 die Abtriebswelle 26 der Rührmaschine 1 drehangetrieben und damit auch ein mit dieser Abtriebswelle 26 verbundener Rührstab.

Es versteht sich von selbst, dass der Aufbau des Elektromotors 3, des Zwischengetriebes 17, insbesondere auch in Verbindung mit den Wellenlagerungen, hier selbstverständlich nur beispielhaft und in keinster Weise beschränkend aufgezeigt ist, um die Funktionsweise der Rührmaschine 1 beispielhaft zu verdeutlichen. Andere Ausgestaltungen des Elektromotors 3 bzw. des Zwischengetriebes 17 mitsamt Abtriebswelle 26 sind jederzeit möglich und denkbar, insbesondere auch im Hinblick auf die hier lediglich beispielhaft angegebenen Lagerungen durch Kugel- bzw. Nadellager.

Wie dies weiter insbesondere aus den Schnittdarstellungen der Fig. 7 und 10 ersichtlich ist, ist die topf- bzw. domartig ausgebildete Innenschale 4 materialeinheitlich und einstückig mit der Außenschale 5 verbunden, wobei die Anbindung der Innenschale 4 an der Außenschale 5 in einem, bezogen auf die Bildebene der Fig. 7 unteren Endbereich der Innenschale 4 und damit im Wesentlichen außerhalb bzw. unterhalb des innenschalenseitigen Aufnahmeraums für den Elektromotor 3 als Antriebsmotor erfolgt. Die Außenschale 5 ist dabei mit einem definierten Konuswinkel a (vergleiche Fig. 7), vorzugsweise über den gesamten Umfang gesehen, gegen die Längsmittelachse 29 des Gehäuses bzw. einer Parallele zu dieser Längsmittelachse 29 geneigt und erstreckt sich somit von dem rührstabseitigen unteren Innenschalenbereich 30 ausgehend konisch nach oben und außen in Richtung zu einem oberen, rührstababgewandten Innenschalenendbereich 31.

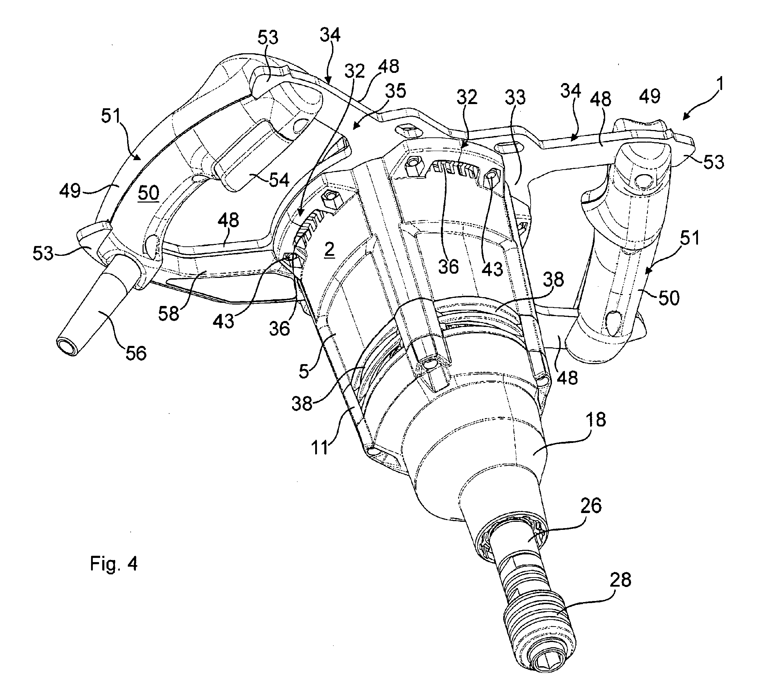

Wie dies insbesondere aus der Fig. 4 ersichtlich ist, sind am oberen freien Ende der Außenschale 5 hier beispielhaft vier über den Außenumfang voneinander beabstandete und jeweils gleich ausgebildete Flanschbereiche 32 angeformt, die jeweils auf einer einem Nabenbereich 33 eines Querbügels 35 eines Handgriffelementes 34 zugewandten Oberseite eine Anlage- und/oder Abstützfläche für eben diesen Nabenbereich 33 des Querbügels 35 des Handgriffelementes 34 ausbilden und in dessen unterseitigen Bereich mehrere Lufteinlassöffnungen 36 (siehe auch Fig. 7) integriert sind, über die, wie dies insbesondere aus der Fig. 7 weiter ersichtlich ist, Kühlluft 37 in den Spaltbereich 6 zwischen Innenschale 4 und Außenschale 5 einströmt.

Wie dies aus der Fig. 4 sehr gut ersichtlich ist, überdecken die Flanschbereiche 32 dabei die Lufteinlassöffnungen 36 so, dass diese vom Flanschbereich 32 gut gegen das Eindringen von Schmutz und anderen Verunreinigungen geschützt ist, Kühlluft jedoch ungehindert in das Antriebsmotorengehäuse einströmen kann.

Die in den Spaltbereich 6 einströmende Kühlluft 37 gelangt über die, den außenschalenseitigen Lufteinlassöffnungen 36 entsprechend zugewandten bzw. zugeordneten innenschalenseitigen Lufteinlassöffnungen 39 in den Aufnahmeraum der Innenschale 4 und strömt dort, entlang des Rotor-Stator-Luftspaltes 21 zu den hier im Luftauslassring 11 ausgebildeten Luftauslassschlitzen 38, wie diese auch sehr gut aus den Fig. 1 bis 4 ersichtlich sind. Das Ansaugen der Kühlluft 37 erfolgt dabei durch die Drehung des Lüfterrads 22 auf der als Antriebswelle fungierenden Rotorwelle 23 des Elektromotors 3.

Wie dies der Fig. 7 weiter entnommen werden kann, kann auch lediglich ein umfangsseitiger Teilbereich mit Luftauslassschlitzen 38 ausgebildet sein.

Wie dies der Fig. 7 weiter entnommen werden kann, ist jeweils im Bereich der Luftauslassschlitze 38 zur Schalldämpfung jeweils ein, bezogen auf die Ausströmrichtung der Kühlluft, oberes und unteres Schalldämpfungselement 41 bzw. 42 angeordnet, die einen Ausströmkanal für die ausströmende Kühlluft ausbilden und mittels denen die hohen Lüfterfrequenzen herausgefiltert werden können, wodurch sich eine deutliche Geräuschreduzierung ergibt.

Die Schalldämpfungselemente 41, 42 können bei einer Ausgestaltung gemäß der Fig. 7, bei der die Luftauslassschlitze nicht vollständig umfangsseitig ausgebildet sind, zum Beispiel durch 3/4-Dämpfungsringe aus einem Schaumstoffmaterial gebildet sein, die im Bereich des Luftauslassrings 11 entsprechend gelagert bzw. abgestützt und gehaltert sind. Im Falle von außenumfangsseitig im Wesentlichen umlaufend ausgebildeten Luftauslassschlitzen 38, wie dies beispielsweise in den Fig. 1 bis 4 gezeigt ist, können die Schalldämpfungselemente 41 bzw. 42 durch entsprechende Dämpfungselementringe gebildet sein, die den zugeordneten Rotorwellen- bzw. Lüfterradbereich dann ringförmig umgeben bzw. umschließen.

Die Flanschbereiche 32 bilden mit ihrer Oberseite weiter eine Anlage- und/oder Abstützfläche aus, auf der, wie bereits zuvor kurz ausgeführt, der ringförmige Nabenbereich 33 eines aus einem Stahlmaterial hergestellten Querbügels 35 des Handgriffelements 34 in einer flächen Anlageverbindung aufliegt und dort mittels mehrerer Schraubverbindungen 43, im hier gezeigten Beispielfall jeweils zwei Schraubverbindungen 43 pro Flanschbereich 32, lösbar festgelegt ist.

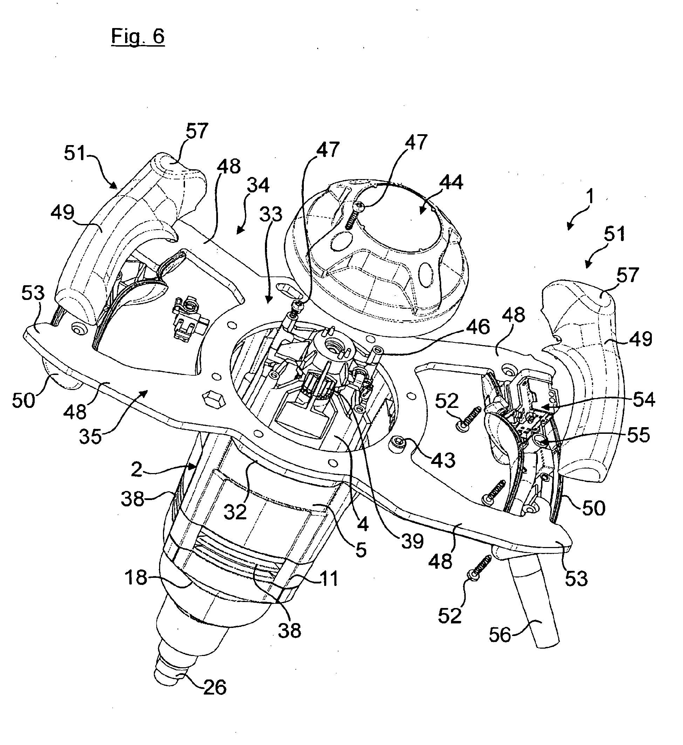

Auf die insbesondere aus der Fig. 6, Fig. 8 und Fig. 10 ersichtliche Oberseite des oberen Innenschalenendbereichs 31 ist weiter eine Gehäusekappe 44 (siehe insbesondere Fig. 6) aufgesetzt, die sich, wie dies insbesondere aus der Schnittdarstellung der Fig. 7 ersichtlich ist, mit einem definierten Gehäusekappenbereich, hier insbesondere einem Gehäusekappenrandbereich 45 auf dem Nabenbereich 33 abstützt bzw. diesen um- oder hintergreift, so dass der Nabenbereich 33 zwischen der Gehäusekappe 44 und den jeweils zugeordneten Flanschbereichen 32 verklemmt ist.

Wie dies insbesondere aus der Fig. 6 ersichtlich ist, durchgreift dabei die Innenschale 4 mit einem oberen Innenschalenendbereich 31 den ringförmig ausgebildeten Nabenbereich 33, wobei an diesem oberen Innenschalenendbereich 31 (vergleiche insbesondere Fig. 8) in Richtung der Gehäusekappe 44 weisende Schraubbutzen 46 angeformt sind, in die von einer Außenseite der Gehäusekappe 44 her Befestigungsschrauben 47 (Fig. 6) einschraubbar sind.

Aus der Darstellung der Fig. 8 sind ferner auch sehr gut die hier beispielhaft ausgebildeten innenschalenseitigen Lufteinlassöffnungen 39 ersichtlich, die den außenschalenseitigen Lufteinlassöffnungen 36 entsprechend zugeordnet sind.

Vom Nabenbereich 33 des Querbügels 35 des Handgriffelements 34 gehen hier strahlenartig auf, bezogen auf den Nabenbereich 33, gegenüberliegenden Seiten jeweils zwei und somit insgesamt vier Querstreben 48 ab, an deren jeweiligen Endbereichen jeweils zwei durch Griffschalen 49, 50 gebildete Handgriffe 51 mittels Schraubverbindungen 52 festgelegt und befestigt sind. Dies ist insbesondere aus der Fig. 6 gut ersichtlich. Die Griffschalen 49, 50 umgreifen dabei die querstrebenseitigen Enden jeweils von unten und von oben und verklemmen diese zwischen sich.

Wie dies weiter insbesondere aus den Fig. 1 bis 5 ersichtlich ist, überragen die Querstreben 48 die an diesen festgelegten Handgriffe 51 jeweils mit einem Fallschutzüberstand 53.

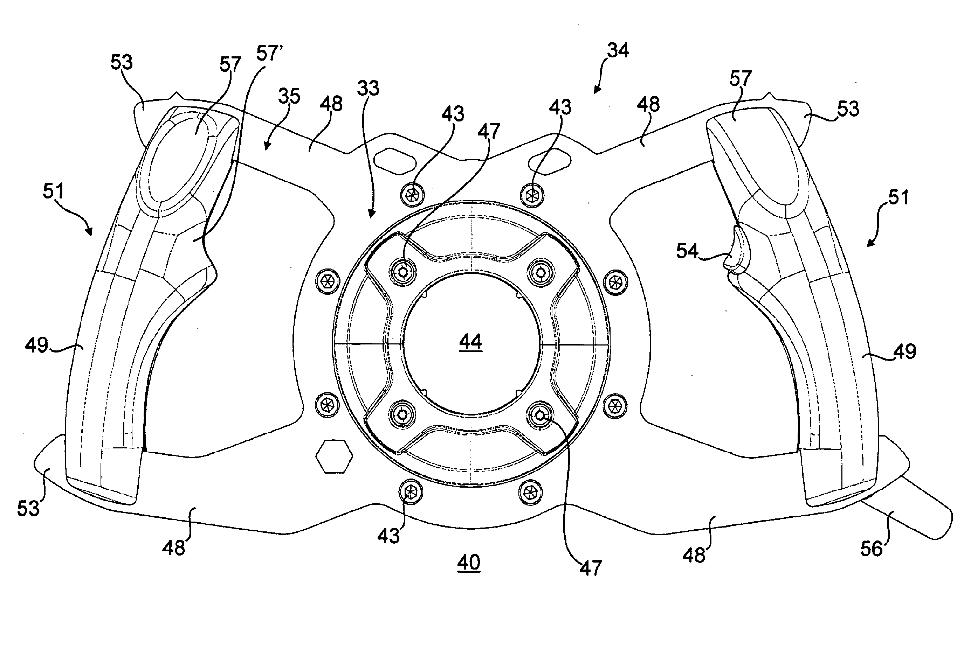

Des Weiteren sind die Handgriffe 51, wie dies insbesondere aus der Fig. 5 ersichtlich ist, von einer Bedienerposition 40 aus gesehen mit einem definierten Winkel nach schräg innen zum Nabenbereich 33 bzw. Gehäuse 2 hin angestellt, wodurch sich eine besonders ergonomische Handhaltung bei der Betätigung der Rührmaschine 1 ergibt.

Wie dies wiederum der Fig. 6 entnommen werden kann, bilden die Griffschalen 49 wenigstens eines der Handgriffe 51 zwischen sich einen Hohl- bzw. Aufnahmeraum auf, in dem hier ein Handschalter 54 einer Betätigungseinrichtung 55 mitsamt Elektronik bzw. Kabelanschluss gelagert und aufgenommen ist. Ein mit dem Handschalter 54 verbundenes Netzkabel 56 ist aus dem Handgriff 51 an einer einer Bedienperson zugewandten Handgriffseite aus diesem herausgeführt, was insbesondere der Fig. 6 und der Fig. 5 entnommen werden kann. Die vom Handschalter 54 zum Antriebsmotor geführte Verkabelung ist über eine der Querstreben 48 geführt (siehe insbesondere Fig. 4) und zwar abgekapselt mittels einer querstrebenseitig angeordneten Schutzschale 58.

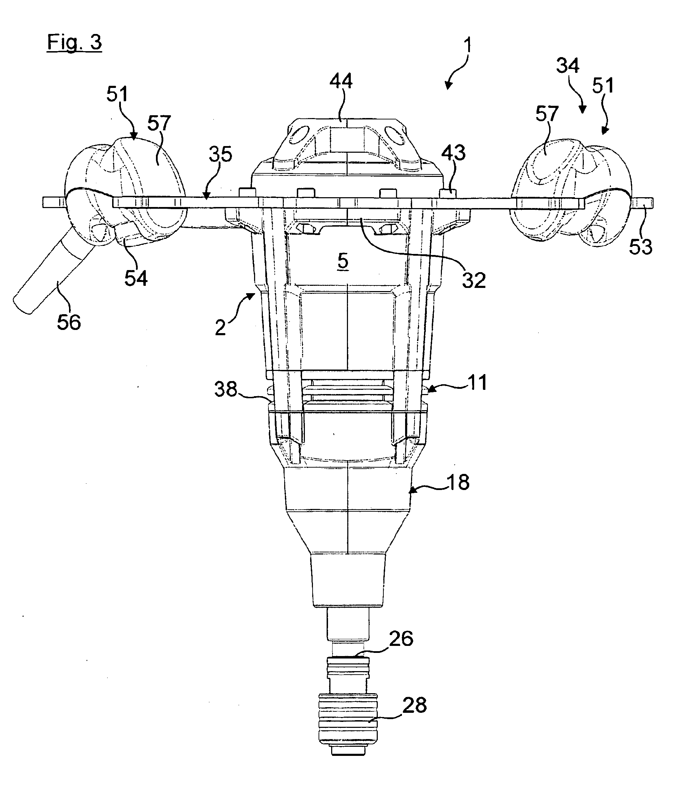

Wie dies schließlich weiter insbesondere aus den Fig. 1 bis 6 ersichtlich ist, weisen die Handgriffe 51 jeweils auf ihrer der Bedienerposition 40 abgewandten Stirnseite eine muldenförmige, schalen- oder wannenartige Vertiefung 57 auf, der, wie dies insbesondere der Fig. 3 zu entnehmen ist, der Handschalter 54 zur Betätigung des Antriebsmotors bzw. Elektromotors 3 an der Unterseite des Handgriffs 51 zugeordnet ist. Weiter liegt neben dieser ersten muldenförmigen Vertiefung 57 eine zweite seitlich innere, zum Nabenbereich 33 hin gewandte Mulde bzw. Daumenablage 57', die es dem Bediener ermöglicht, die Daumenablageposition in definierter Weise zu verändern, was insbesondere bei längerer Rührmaschinenbetätigung als sehr angenehm empfunden wird. Diese zusätzliche Mulde bzw. Daumenablage 57' kann, zum Beispiel je nach der Lage des Handschalters 54, an einem oder an beiden Handgriffen 51 vorgesehen sein, oder an beiden Handgriffen 51 unterschiedlich ausgebildet und angeordnet sein.

Wie dies weitere insbesondere zum Beispiel aus den Fig. 1 bis 5 ersichtlich ist, können im Bereich des Nabenbereichs 33 bzw. des Querbügels 35 Ausnehmungen 59, zum Beispiel Sechskantausnehmungen oder dergleichen angeordnet sein, durch die hindurch Rührschäfte von Rührern gesteckt werden können und somit Rührstäbe an der Rührmaschine 1, zum Beispiel für einen Austausch von Rührstäben oder dergleichen, gehaltert werden können.

Mit einem derartigen Aufbau der Rührmaschine 1 wird bei einer Betätigung derselben die über den Bediener und das Handgriffelement 34 eingeleitete Kraft vorteilhaft entlang der Außenschale 5 und damit an der Innenschale 4 vorbei in den in der Fig. 7 unteren Bereich des Antriebsmotorengehäuses 2 eingeleitet, wodurch sichergestellt ist, dass die als Motorgehäuse fungierende Innenschale 4 von wenigstens einem Großteil dieser Kraft entlastet wird, wodurch sich insgesamt ein sehr verwindungssteifer Gehäuseaufbau ergibt. Die Krafteinleitung ist in der Fig. 7 lediglich äußerst schematisch durch die Kraftpfeile F dargestellt. Wie dies aus der Fig. 7 ersichtlich ist, erfolgt die weitere Krafteinleitung dann hier beispielhaft in den Luftauslassring 11 bzw. in das Getriebegehäuse 18 hinein.

Des Weiteren wird hierdurch eine effektive Kühlung des Antriebs- bzw. Elektromotors mitsamt ausgezeichneter Schalldämpfung erzielt.

Die Erfindung wurde vorliegend in Verbindung mit der Figurenbeschreibung lediglich beispielhaft beschrieben. Abwandlungen und Ausgestaltungen hierzu, die im Griffbereich eines Durchschnittsfachmanns liegen, sind selbstverständlich vom Schutzumfang des vorliegenden Erfindungsgegenstandes mitumfasst. Dies betrifft insbesondere zum Beispiel die Ausstattung einer Rührmaschine mit mehreren Anschlüssen für Rührstäbe, so dass zum Beispiel mehrere Rührstäbe gleich- und/oder gegensinnig drehangetrieben werden können.

## Patentansprüche

1. Handbetätigbare Rührmaschine, mit einem Gehäuse (2), in dem ein Antriebsmotor (3) wenigstens zum Teil aufgenommen ist, wobei der Antriebsmotor (3) wenigstens eine Antriebswelle (23) aufweist, die unmittelbar oder mittelbar mit einem Schaft wenigstens eines Rührstabs wirkverbunden ist, wobei das Gehäuse (2) eine wenigstens den Antriebsmotor (3) wenigstens teilweise im Inneren aufnehmende Innenschale (4) aufweist, die außenumfangsseitig wenigstens bereichs- oder abschnittsweise mit einem definierten Spaltabstand von einer ein- oder mehrteiligen Außenschale (5) umgeben ist, wobei an der Außenschale (5) ein Handgriffelement (34) befestigt und/oder abgestützt ist, und wobei die Innenschale (4) eine zylindrische Form aufweist, die in einem definierten Anbindungsbereich an der Außenschale (5) als separates Bauteil angebunden ist oder mit dieser in einem definierten Anbindungsbereich materialeinheitlich und/oder einstückig verbunden ist, dergestalt, dass der Anbindungsbereich an einem, bezogen auf den innenschalenseitigen Motoraufnahmeraum, randbereichsseitigen oder endseitigen Innenschalenwandbereich der Innenschale (4) liegt, **dadurch gekennzeichnet, dass** die Anbindung der Innenschale (4) an der Außenschale (5) in einem unteren Endbereich der Innenschale (4) und damit im Wesentlichen unterhalb des innehschalenseitigen Aufnahmeraums für den Antriebsmotor (3) erfolgt, so dass ein aussenschalenseitiger Kraftfluss vom Handgriffelement (34) aus entlang der Außenschale (5) und damit im Wesentlichen an der Innenschale (4) vorbei im Bereich außerhalb des innenschalenseitigen Motoraufnahmeraums in die Innenschale (4) eingeleitet wird.

2. Rührmaschine nach Anspruch 1, **dadurch gekennzeichnet, dass** der zwischen der Innenschale (4) und der Außenschale (5) ausgebildete Spaltbereich (6) wenigstens bereichsweise umfangsseitig umlaufend ausgebildet ist und/oder dass im Spaltbereich (6) wenigstens ein die Außenschale (5) mit der Innenschale (4) verbindender Verbindungssteg vorgesehen ist.

3. Rührmaschine nach einem der vorhergehenden Ansprüche, **dadurch gekennzeichnet, dass** die Außenschale (5) mit einem definierten Konuswinkel gegen eine Längsmittelachse (29) des Gehäuses (2) geneigt ist, insbesondere von einem rührstabseitigen Innenschalenbereich (30) ausgehend konisch nach oben und außen in Richtung zu einem oberen, rührstababgewandten Innenschalenendbereich (31) geführt ist.

4. Rührmaschine nach einem der vorhergehenden Ansprüche, **dadurch gekennzeichnet, dass** das Handgriffelement (34) einen ein- oder mehrteiligen, mittigen oder zentralen Nabenbereich (33) aufweist, der in einer vorzugsweise flächigen Anlageverbindung an wenigstens einer außenschalenseitigen Anlage- und/oder Abstützfläche anliegt und/oder dort befestigt ist, insbesondere dort mittels wenigstens eines Befestigungselementes (43) lösbar befestigt ist.

5. Rührmaschine nach Anspruch 4, **dadurch gekennzeichnet, dass** der Nabenbereich (33) des Handgriffelementes (34) ringförmig und/oder durch einzelne segmentartige Abschnitte ausgebildet ist und/oder im montierten Zustand von einem definierten Innenschalenbereich (31) durchgriffen ist.

6. Rührmaschine nach Anspruch 4 oder 5, **dadurch gekennzeichnet, dass** auf einer rührstabgewandten Seite des Gehäuses (2) eine Gehäusekappe (44) auf die Innenschale (4) aufgesetzt und mit dieser verbunden ist, wobei sich ein definierter Gehäusekappenbereich, insbesondere ein Gehäusekappenrandbereich, im montierten Zustand wenigstens bereichs- oder abschnittsweise auf dem Nabenbereich (33) des Handgriffselementes abstützt und/oder diesen um- oder hintergreift, insbesondere dergestalt, dass der Nabenbereich (38) des Handgriffelementes (34) zwischen der Gehäusekappe (44) und der wenigstens einen außenschalenseitigen Anlage- und/oder Abstützfläche verklemmt ist.

7. Rührmaschine nach einem der Ansprüche 4 bis 6, **dadurch gekennzeichnet, dass** die wenigstens eine außenschalenseitige Anlage- und/oder Abstützfläche durch einen von der Außenschale abragenden Flanschbereich (32) gebildet ist, der auf einer dem Nabenbereich (33) des Handgriffelementes (34) zugewandten Oberseite die Anlage- und/oder Abstützfläche für den Nabenbereich (33) des Handgriffelementes (34) ausgebildet und in dessen unterseitigen Bereich wenigstens eine Lufteinlassöffnung (36) integriert ist, über die Kühlluft (37) in den Spaltbereich (6) zwischen Innenschale (4) und Außenschale (5) einströmt, wobei bevorzugt vorgesehen ist, dass mehrere voneinander beabstandete Flanschbereiche (32) außenumfangsseitig um die Außenschale (5) herum angeordnet sind.

8. Rührmaschine nach einem der vorhergehenden Ansprüche, **dadurch gekennzeichnet, dass** die Innenschale (4) den vorzugsweise durch einen Elektromotor gebildeten Antriebsmotor (3) formschlüssig umgibt und/oder aufnimmt.

9. Rührmaschine nach Anspruch 7 oder 8, **dadurch gekennzeichnet, dass** die Innenschale (4) wenigstens eine der wenigstens einen äußeren Lufteinlassöffnung (36) in der Außenschale (5) zugeordnete und/oder zugewandte innere Lufteinlassöffnung (39) aufweist, über welche wenigstens eine innere Lufteinlassöffnung (39) Kühlluft in den Bereich des Antriebsmotors (3) gelangt und diesen anströmt und/oder umströmt und/oder durchströmt, insbesondere im Bereich eines zwischen einem Rotor und einem Stator ausgebildeten Rotor-Stator-Luftspaltes (21) eines Elektromotors als Antriebsmotor (3) durchströmt.

10. Rührmaschine nach einem der vorhergehenden Ansprüche, **dadurch gekennzeichnet, dass** im Bereich eines vorzugsweise auf der Antriebswelle (23) des Antriebsmotors (3) gelagerten Lüfterrades (22) ferner wenigstens eine gehäuseseitige Luftauslassöffnung (38) vorgesehen ist, über die die Kühlluft (37) nach dem Um- und/oder An- und/oder Durchströmen des Antriebsmotors (3) aus dem Gehäuse (2) abströmt, wobei im Bereich der wenigstens einen Luftauslassöffnung (38) wenigstens ein schalldämpfendes Element (41, 42) angeordnet ist.

11. Rührmaschine nach Anspruch 10, **dadurch gekennzeichnet, dass** die wenigstens eine Luftauslassöffnung (38) in einem Luftauslassring (11) ausgebildet ist, der einstückig und/oder materialeinheitlich mit wenigstens einem Gehäuse (2, 18) der Rührmaschine (1) ausgebildet ist oder der durch ein separates, mit wenigstens einem Gehäuse (2, 18) der Rührmaschine (1) verbindbares Bauteil gebildet ist, wobei bevorzugt vorgesehen ist, dass das wenigstens eine Schalldämpfungselement (41, 42) im Bereich des Luftauslassrings (11) befestigt und/oder gehaltert ist.

12. Rührmaschine nach Anspruch 10 oder 11, **dadurch gekennzeichnet, dass** die Schalldämpfung durch ein, bezogen auf die Ausströmrichtung der Kühlluft, oberes und/oder unteres, bevorzugt wenigstens zum Teil ringförmig umlaufendes Schalldämpfungselement (41, 42) gebildet ist.

13. Rührmaschine nach einem der vorhergehenden Ansprüche, **dadurch gekennzeichnet, dass** das Handgriffelement (34) einen Querbügel (35) mit einem mittleren, dem Gehäuse (2) des Antriebsmotors (3) zugeordneten und/oder dort abgestützten und/oder festgelegten Nabenbereich (33), vorzugsweise mit einem ringförmigen Nabenbereich (33), aufweist, von welchem Nabenbereich (33) mehrere Querstreben (48) strahlartig abragen, wobei auf, bezogen auf den Nabenbereich (33), gegenüberliegenden Querbügelseiten jeweils ein Handgriff (51) angeordnet ist.

## Claims

1. Manually operable stirring machine, having a housing (2) in which a drive motor (3) is at least partially received, wherein the drive motor (3) has at least one driveshaft (23), which is operatively connected directly or indirectly to a shaft of at least one stirrer, wherein the housing (2) has an inner shell (4) that at least partially receives at least the drive motor (3) in the interior, said shell being enclosed by a single-part or multi-part outer shell (5) on its outer peripheral side at least in regions or in sections with a defined gap distance, wherein a manual gripping element (34) is fastened and/or supported on the outer shell (5), and wherein the inner shell (4) has a cylindrical shape that is connected as a separate component to the outer shell (5) in a defined connecting region or is connected thereto in a defined connecting region with material unity and/or integrally, in such a way that the connecting region is located on an edge-side or end-side inner shell wall region of the inner shell (4) with respect to the inner-shell-side engine receiving chamber, **characterised in that** the connection of the inner shell (4) to the outer shell (5) takes place in a lower end region of the inner shell (4) and thus substantially beneath the inner-shell-side receiving chamber for the driver motor (3), such that an outer-shell-side force flow from the manual gripping element (34) along the outer shell (5) and thus substantially past the inner shell (4) in the region outside the inner-shell-side engine receiving chamber, is introduced into the inner shell (4).

2. Stirring machine according to claim 1, **characterised in that** the gap region (6) formed between the inner shell (4) and the outer shell (5) is designed to be revolving at its periphery at least in certain regions, and/or, in the gap region (6), at least one connecting panel, which connects the outer shell (5) to the inner shell (4), is provided.

3. Stirring machine according to one of the preceding claims, **characterised in that** the outer shell (5) is inclined towards a longitudinal central axis (29) of the housing (2) at a defined conical angle, in particular guided conically upwards from a stirrer-side inner shell region (30) and outwards in the direction towards an upper inner shell end region (31) that is facing away from the stirrer.

4. Stirring machine according to one of the preceding claims, **characterised in that** the manual gripping element (34) has a single-part or multi-part, centred or central hub region (33), which, in a preferably flat structural connection, rests against at least one outer-shell-side contact surface and/or support surface, and/or is fastened to this, in particular releasably fastened to this by means of at least one fastening element (43).

5. Stirring machine according to claim 4, **characterised in that** the hub region (33) of the manual gripping element (34) is annular and/or is formed by individual, segmented sections, and/or is clamped down in the assembled state by a defined inner shell region (31).

6. Stirring machine according to claim 4 or 5, **characterised in that** a housing cap (44) is placed on the inner shell (4) on a side of the housing (2) facing away from the stirrer, and is connected thereto, wherein a defined housing cap region, in particular a housing cap edge region, is supported, in the assembled state, at least in certain regions or sections, on the hub region (33) of the manual gripping element, and/or encompasses it or engages behind it, in particular in such a way that the hub region (38) of the manual gripping element (34) is clamped between the housing cap (44) and the at least one outer-shell-side contact and/or support surface.

7. Stirring machine according to one of claims 4 to 6, **characterised in that** the at least one outer-shell-side contact and/or support surface is formed by a flange region (32) protruding downwards from the outer shell, said region forming, on an upper side facing towards the hub region (33) of the manual gripping element (34), the contact and/or support surface for the hub region (33) of the manual gripping element (34) and in whose underside region at least one air inlet opening (36) is integrated, via which cooling air (37) flows into the gap region (6) between the inner shell (4) and the outer shell (5), wherein provision is preferably made for several flange regions (32) that are spaced apart from one another to be arranged on their external peripheral side around the outer shell (5).

8. Stirring machine according to one of the preceding claims, **characterised in that** the inner shell (4) positively encloses and/or receives the drive motor (3) that is preferably formed by an electric motor.

9. Stirring machine according to claim 7 or 8, **characterised in that** the inner shell (4) has at least one inner air inlet opening (39) allocated to the at least one outer air inlet opening (36) in the outer shell (5) and/or facing it, via which at least one inner air inlet opening (39) cooling air arrives at the region of the drive motor (3) and flows past it and/or around it and/or through it, in particular flows through it in the region of a rotor-stator air gap (21) of an electric motor as a drive motor (3), said gap being formed between a rotor and a stator.

10. Stirring machine according to one of the preceding claims, **characterised in that**, furthermore, at least one housing-side air outlet opening (38) is provided in the region of a fan wheel (22) that is preferably mounted on the driveshaft (23) of the drive motor (3), via which opening the cooling air (37) flows out of the housing (2) after having flowed around and/or past and/or through the drive motor (3), wherein at least one sound-absorbing element (41, 42) is arranged in the region of the at least one air outlet opening (38).

11. Stirring machine according to claim 10, **characterised in that** the at least one air outlet opening (38) is formed in an air outlet ring (11), which is designed integrally and/or with material unity with at least one housing (2, 18) of the stirring machine (1), or is formed by a separate component that can be connected to at least one housing (2, 18) of the stirring machine (1), wherein provision is preferably made for the at least one sound-absorbing element (41, 42) to be fastened and/or held in the region of the air outlet ring (11).

12. Stirring machine according to claim 10 or 11, **characterised in that** the sound absorption is formed, with respect to the outflow direction of the cooling air, by an upper and/or lower, preferably at least partially annularly circumferential, sound-absorbing element (41, 42).

13. Stirring machine according to one of the preceding claims, **characterised in that** the manual gripping element (34) has a transverse bar (35) having a centred hub region (33) that is allocated to the housing (2) of the drive motor (3) and/or is supported and/or positioned there, preferably having an annular hub region (33), from which hub region (33) several transverse struts (48) protrude downwards in the form of a stream, wherein, with respect to the hub region (33), a respective manual trip (51) is arranged on opposite sides of the transverse bar.

## Revendications

1. Machine de mélange manuelle avec un boîtier (2), dans lequel un moteur d'entraînement (3) est reçu au moins en partie, le moteur d'entraînement (3) présentant au moins un arbre d'entraînement (23) qui est relié directement ou indirectement à une tige d'au moins une barre de mélange, le boîtier (2) présentant une coque intérieure (4) recevant au moins le moteur d'entraînement (3) au moins en partie à l'intérieur qui est entourée côté périphérie extérieure au moins par endroits, à une distance d'espacement définie, par une coque extérieure (5) en une ou plusieurs parties, sur la coque extérieure (5) étant fixé et/ou en appui un élément de poignée (34), et la coque intérieure (4) présentant une forme cylindrique liée dans une zone de liaison définie à la coque extérieure (5) comme composant séparé ou est reliée à celle-ci dans une zone de liaison définie en une seule matière et/ou d'un seul tenant de manière à former la zone de liaison à une zone de paroi de la coque intérieure (4) côté extrémité ou côté zone de bord par rapport à l'espace de réception de moteur côté coque intérieure, **caractérisée en ce que** la liaison de la coque intérieure (4) à la coque extérieure (5) est effectuée dans une zone d'extrémité inférieure de la coque intérieure (4) et ainsi sensiblement sous l'espace de réception côté coque intérieure pour le moteur d'entraînement (3) de sorte qu'un flux de force côté coque extérieure soit introduit depuis l'élément de poignée (34) le long de la coque extérieure (5) et ainsi sensiblement devant la coque intérieure (4) dans la zone en dehors de l'espace de réception de moteur côté coque intérieure dans la coque intérieure (4).

2. Machine de mélange selon la revendication 1, **caractérisée en ce qu'**une zone de fente (6) entre la coque intérieure (4) et la coque extérieure (5) est réalisée, rotative au moins par endroits côté périphérie et/ou **en ce qu'**au moins une nervure de liaison reliant la coque extérieure (5) à la coque intérieure (4) est prévue dans la zone de fente (6).

3. Machine de mélange selon l'une quelconque des revendications précédentes, **caractérisée en ce que** la coque extérieure (5) est inclinée d'un angle de cône vis-à-vis d'un axe médian longitudinal (29) du boîtier (2), en particulier est guidée à partir d'une zone de coque intérieure (30) côté barre de mélange, coniquement vers le haut, et à l'extérieur en direction d'une zone d'extrémité de coque intérieure (31) supérieure éloignée de la barre de mélange.

4. Machine de mélange selon l'une quelconque des revendications précédentes, **caractérisée en ce que** l'élément de poignée (34) présente une zone de moyeu (33) centrale ou médiane, en une ou plusieurs parties, qui repose dans une liaison d'installation de préférence plate sur au moins une surface d'installation et/ou d'appui côté coque extérieure et/ou y est fixée, en particulier y est fixée de manière amovible à l'aide d'au moins un élément de fixation (43).

5. Machine de mélange selon la revendication 4, **caractérisée en ce que** la zone de moyeu (33) de l'élément de poignée (34) est réalisée en forme d'anneau et/ou par des sections individuelles de type segment et/ou est traversée à l'état monté par une zone de coque intérieure (31) définie.

6. Machine de mélange selon la revendication 4 ou 5, **caractérisée en ce que** sur un côté du boîtier (2) tourné vers la barre de mélange, un couvercle de boîtier (44) est placé sur la coque intérieure (4) et est relié à celle-ci, de telle sorte qu'une zone définie du couvercle de boîtier, en particulier une zone périphérique s'appuie à l'état monté au moins par endroits ou sections sur la zone de moyeu (33) de l'élément de poignée et/ou l'entoure ou vient en prise derrière, en particulier de telle manière que la zone de moyeu (38) de l'élément de poignée (34) soit serrée entre le couvercle de boîtier (44) et l'au moins une surface d'installation et/ou d'appui côté coque extérieure.

7. Machine de mélange selon l'une quelconque des revendications 4 à 6, **caractérisée en ce que** l'au moins une surface d'installation et/ou d'appui côté coque extérieure est formée par une zone de bride (32) s'élevant de la coque extérieure réalisée sur un côté supérieur tourné vers la zone de moyeu (33) de l'élément de poignée (34) de la surface d'installation et/ou d'appui pour la zone de moyeu (33) de l'élément de poignée (34) et dans la zone côté inférieur de laquelle au moins une ouverture d'entrée d'air (36) est intégrée, par laquelle de l'air de refroidissement (37) afflue dans la zone de fente (6) entre la coque intérieure (4) et la coque extérieure (5), étant prévu de préférence que plusieurs zones de bride (32) espacées les unes des autres sont disposées côté périphérie extérieure autour de la coque extérieure (5).

8. Machine de mélange selon l'une quelconque des revendications précédentes, **caractérisée en ce que** la coque intérieure (4) entoure et/ou reçoit par complémentarité de forme le moteur d'entraînement (3) formé de préférence par un moteur électrique.

9. Machine de mélange selon la revendication 7 ou 8, **caractérisée en ce que** la coque intérieure (4) présente au moins une ouverture d'entrée d'air (39) intérieure tournée et/ou associée à l'au moins une ouverture d'entrée d'air (36) extérieure dans la coque extérieure (5), par laquelle au moins une ouverture d'entrée d'air (39) intérieure de l'air de refroidissement parvient dans la zone du moteur d'entraînement (3) et souffle sur celle-ci et/ou la contourne et/ou la traverse, en particulier la traverse dans la zone d'une fente d'air de rotor-stator (21) réalisée entre un rotor et un stator d'un moteur électrique servant de moteur d'entraînement (3).

10. Machine de mélange selon l'une quelconque des revendications précédentes, **caractérisée en ce qu'**au moins une ouverture de sortie d'air (38) côté boîtier est de plus prévue dans la zone d'une roue de ventilateur (22) logée de préférence sur l'arbre d'entraînement (23) du moteur d'entraînement (3), par laquelle l'air de refroidissement (37) s'échappe du boîtier (2) après le contournement et/ou le soufflage et/ou la traversée du moteur d'entraînement (3), au moins un élément (41, 42) amortissant le bruit étant disposé dans la zone de l'au moins une ouverture de sortie d'air (38).

11. Machine de mélange selon la revendication 10, **caractérisée en ce que** l'au moins une ouverture de sortie d'air (38) est réalisée dans un anneau de sortie d'air (11) réalisé d'un seul tenant et/ou en une seule matière avec au moins un boîtier (2, 18) de la machine de mélange (1) ou qui est formé par un composant séparé, pouvant être relié à au moins un boîtier (2, 18) de la machine de mélange (1), étant prévu de préférence que l'au moins un élément d'amortissement de bruit (41, 42) soit fixé et/ou maintenu dans la zone de l'anneau de sortie d'air (11).

12. Machine de mélange selon la revendication 10 ou 11, **caractérisée en ce que** l'amortissement de bruit est formé par un élément d'amortissement de bruit (41, 42), supérieur et/ou inférieur par rapport au sens d'échappement, tournant de préférence au moins en partie en anneau.

13. Machine de mélange selon l'une quelconque des revendications précédentes, **caractérisée en ce que** l'élément de poignée (34) présente un étrier transversal (35) avec une zone de moyeu (33) médiane fixée et/ou en appui et/ou associée au boîtier (2) du moteur d'entraînement (3), de préférence avec une zone de moyeu (33) annulaire, de laquelle zone de moyeu (33) plusieurs traverses (48) dépassent radialement, respectivement une poignée (51) étant disposée sur des côtés d'étrier transversal en regard de la zone de moyeu (33).
